# EUROPEAN PATENT APPLICATION

(11) **EP 3 409 798 A1**
(43) Date of publication of application: **05.12.2018**
(21) Application number: 17743924.7
(22) Date of filing: 11.01.2017
(51) Int. Cl.: C22B 23/00, B01D 53/14, B08B 9/08, C22B 3/08, C22B 3/44

(54) **METHOD FOR REMOVING RESIDUAL HYDROGEN SULFIDE**

(30) Priority: 28.01.2016 JP 2016014137
(71) Applicant: Sumitomo Metal Mining Co., Ltd., Tokyo 105-8716 (JP)
(72) Inventor: FUKE, Tomonao, Tokyo 105-8716 (JP); OISHI, Takao, Tokyo 105-8716 (JP)
(74) Representative: Jones, Nicholas Andrew
(86) International application number: PCT/JP2017/000602
(87) International publication number: WO 2017/130693

(57) **Abstract**

Provided is a method for removing residual hydrogen sulfide, whereby hydrogen sulfide remaining in a reaction container can be efficiently removed in a short operation time. The method for removing residual hydrogen sulfide pertaining to the present invention comprises removing hydrogen sulfide remaining in a reaction container in which a sulfurizing agent is added to a solution and a sulfuration reaction is generated, the method wherein the solution is withdrawn from the reaction container, an amount of water corresponding to 30 vol% to 100 vol% of the total volume of the reaction container after withdrawal of the solution is added and stirred, and a replacement treatment is then performed in which the reaction container from which the water is withdrawn is filled with an inert gas.

## Description

### TECHNICAL FIELD

The present invention relates to a method for removing hydrogen sulfide remaining in a sulfurization reaction container for performing a treatment by a sulfurization reaction using a sulfurizing agent.

### BACKGROUND ART

In recent years, recovery of valuable metals from low nickel grade mineral ores by high pressure acid leach (HPAL) method, in which acid leaching is performed at high temperature and high pressure, has been put to practical use in the field of nickel hydrometallurgy using a nickel oxide mineral ore as a raw material. Moreover, with regard to the recovery of valuable metals such as nickel and cobalt leached from a nickel oxide mineral ore by the HPAL method, a method in which valuable metals are recovered as a sulfide by adding a sulfurizing agent such as hydrogen sulfide gas to a sulfurization bath containing the valuable metals under pressure is generally performed.

However, in such method for recovering valuable metals as a sulfide, a problem arises that a sulfurization reaction occurs on the inner wall of the reaction container and the inner wall of the pipe as well and the reaction products are attached to the inner walls thereof. The attached substances grow as the sulfurization reaction continues and thus the volume of the reaction container gradually decreases when the attachment is allowed. As a result, the retention time in the reaction container is shortened and the efficiency of sulfurization reaction becomes poor or the amount of liquid supplied decreases by the clogging of pipe, and the production efficiency thus decreases.

With regard to these problems, for example, a method for suppressing the generation of attached substances on the inner wall of a reaction container and the growth thereof by adjusting the pressure in the reaction container, the reaction temperature, and the addition of seed crystals has been known as described in Patent Document 1. By using this method, it is possible to suppress the generation of attached substances in the reaction container to some extent but it is impossible to completely eliminate the generation. For this reason, an operation of stopping the running at a frequency of, for example, about one time per six months, opening the reaction container, and removing the attached substances attached to the inner wall of the reaction container is required.

Meanwhile, when opening the reaction container in order to perform such an attached substance removal operation, an operation of lowering the residual hydrogen sulfide concentration in the reaction container to a value at the level at which the human body is not affected (hereinafter, referred to as the "residual hydrogen sulfide removal operation") is required as a pretreatment thereof. However, there has been hitherto no knowledge on the method for efficiently performing the residual hydrogen sulfide removal operation and a method in which a gas is simply blown into the reaction container and replaced with the residual hydrogen sulfide is generally performed.

Incidentally, the residual hydrogen sulfide is oxidized and converted into fine sulfur and the filterability of the slurry is diminished, for example, in the case of using air and the like as a gas for the replacement. For this reason, an inert gas such as nitrogen or argon is used as the gas to be used for the gas replacement.

However, in the method by gas replacement using an inert gas described above, it takes time of about from 2 to 3 days in order to lower the residual hydrogen sulfide concentration in the reaction container to a value at the level at which the human body is not affected and there is a problem that the running efficiency diminishes. In addition, it is required to excessively blow an inert gas and thus there is also a problem that the cost increases.

Hence, there has been a demand for a method of a hydrogen sulfide removal operation for efficiently removing the hydrogen sulfide gas remaining in the reaction container while shortening the period during which the running is stopped.

Patent Document 1: Japanese Unexamined Patent Application, Publication No. 2011-241446

### DISCLOSURE OF THE INVENTION

### Problems to be Solved by the Invention

The present invention has been proposed in view of such circumstances, and an object thereof is to provide a method for efficiently removing hydrogen sulfide remaining in a reaction container in a short operation time.

### Means for Solving the Problems

The inventors of the present invention have conducted intensive investigations to solve the above-mentioned problems. As a result, it has been found out that it is possible to effectively shorten the treatment time for the replacement treatment by charging a predetermined amount of water into the reaction container and subjecting the water to a stirring treatment prior to the removal of hydrogen sulfide remaining in a reaction container by replacement thereof with an inert gas, then withdrawing the water, and performing the replacement treatment, whereby the present invention has been completed. Specifically, the present invention provides the following.
(1) A first aspect of the present invention is a method for removing residual hydrogen sulfide, the method including removing hydrogen sulfide remaining in a reaction container in which a sulfurizing agent is added to a solution and a sulfurization reaction is caused, in which the solution is withdrawn from the reaction container and water in an amount corresponding to 30% by volume or more and 100% by volume or less of a total volume of the reaction container is added to the reaction container after being subjected to withdrawal of the solution and stirred and the reaction container after being subjected to withdrawal of the water is filled with an inert gas.
(2) A second aspect of the present invention is the method for removing residual hydrogen sulfide according to the first aspect, in which a stirring time of water charged in the reaction container is set to 10 minutes or more.
(3) A third aspect of the present invention is the method for removing residual hydrogen sulfide according to the first or second aspect, in which the solution is a solution obtained after a leachate containing nickel and cobalt is obtained by acid leaching of a nickel oxide mineral ore using sulfuric acid at high temperature and high pressure, the leachate is neutralized, then a leachate after neutralization is subjected to a sulfurization treatment using a sulfurizing agent, and a sulfide of nickel and cobalt the sulfide generated is separated.

### Effects of the Invention

According to the present invention, it is possible to efficiently remove hydrogen sulfide remaining in a reaction container in a short operation time. This makes it possible to shorten the time to stop the running and to perform efficient process running.

### BRIEF DESCRIPTION OF THE DRAWINGS

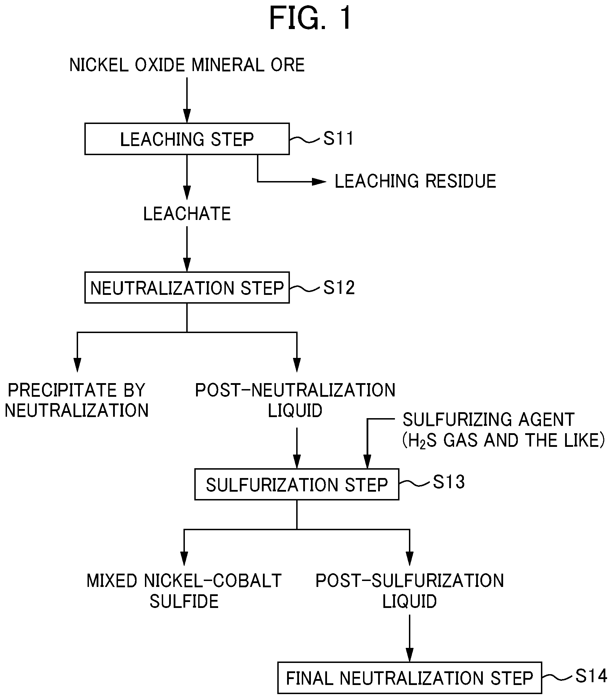

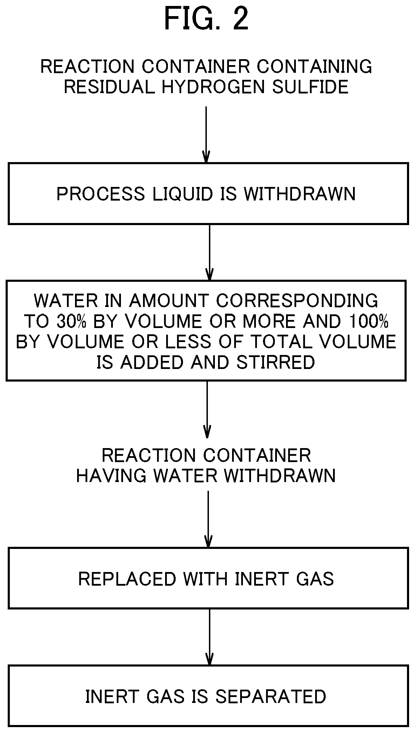

Fig. 1 is a flow chart which illustrates the flow of a hydrometallurgical process of a nickel oxide mineral ore. Fig. 2 is a diagram for explaining the flow of a method for removing residual hydrogen sulfide.

### PREFERRED MODE FOR CARRYING OUT THE INVENTION

Hereinafter, specific embodiments (hereinafter referred to as the "present embodiments") of the present invention will be described in detail. It should be noted that the present invention is not limited to the following embodiments and can be modified in various ways without changing the gist of the present invention. Incidentally, in the present specification, the notation "X to Y" (X and Y are arbitrary numerical values) means "X or more and Y or less".

### <<1. Overview>>

The method for removing residual hydrogen sulfide according to the present embodiment is a method for removing hydrogen sulfide remaining in a reaction container in which a sulfurizing agent is added to a solution and a sulfurization reaction is caused.

More specifically, the method for removing residual hydrogen sulfide is a method for removing hydrogen sulfide remaining in the interior of, for example, a sulfurization reaction container used in the sulfurization step in the hydrometallurgical process of a nickel oxide mineral ore, namely, a sulfurization reaction container after a leachate containing nickel and cobalt is obtained by acid leaching of a nickel oxide mineral ore using sulfuric acid at high temperature and high pressure, the leachate is neutralized, then a sulfurizing agent such as hydrogen sulfide gas is added to the leachate, a sulfurization treatment is performed, and a sulfide of nickel and cobalt thus generated is separated.

Moreover, in this method for removing residual hydrogen sulfide, the solution is withdrawn from the reaction container and water in an amount corresponding to a proportion to be 30% by volume or more and 100% by volume or less of the total volume of the reaction container is added to the reaction container after being subjected to withdrawal of the solution and stirred. Subsequently, water is withdrawn from the reaction container and the reaction container after being subjected to withdrawal of the water is filled with an inert gas. In other words, in this method, water is poured into the reaction container at a predetermined proportion and stirred before the interior of the reaction container is replaced with an inert gas.

According to such a method for removing residual hydrogen sulfide, it is possible to decrease the amount of hydrogen sulfide in the reaction container to be replaced with an inert gas to the minimum, and it is thus possible to shorten the operation time and to perform an efficient and effective removal operation. In addition, this makes it possible to shorten the time to stop the running for opening of the reaction container and to improve the efficiency of process running.

Hereinafter, the method for removing residual hydrogen sulfide will be described in more detail.

### <<2. Method for Removing Residual Hydrogen Sulfide>>

The method for removing residual hydrogen sulfide is a method for removing hydrogen sulfide remaining in a reaction container in which a sulfurizing agent is added to a solution and a sulfurization reaction is caused as described above, and for example, an operation in a reaction container after the sulfurization treatment in the hydrometallurgical process of a nickel oxide mineral ore can be mentioned. Hereinafter, the method for removing residual hydrogen sulfide will be described by taking the removal of residual hydrogen sulfide in the reaction container after the sulfurization treatment in the hydrometallurgical process as an example.

### <2-1. Hydrometallurgical Process of Nickel Oxide Mineral Ore>

Fig. 1 is a flow chart which illustrates of the flow of a hydrometallurgical process of a nickel oxide mineral ore. This hydrometallurgical process includes a leaching step S11 of subjecting a nickel oxide mineral ore to acid leaching using sulfuric acid at high temperature and high pressure to obtain a leachate and a leaching residue, a neutralization step S12 of adding a neutralizing agent to the leachate to obtain a precipitate by neutralization containing impurities and a post-neutralization liquid, and a sulfurization step S13 of adding a sulfurizing agent to the post-neutralization liquid to obtain a sulfide and a post-sulfurization liquid. In addition, this hydrometallurgical process includes a final neutralization step S14 of recovering the post-sulfurization liquid discharged in the sulfurization step S13 and detoxifying the post-sulfurization liquid.

In the method for removing residual hydrogen sulfide according to the present embodiment, for example, hydrogen sulfide remaining in the reaction container after the treatment in the sulfurization step S13 in this hydrometallurgical process is removed.

### (1) Leaching step

The leaching step S11 is a step of adding sulfuric acid to a slurry of a nickel oxide mineral ore and subjecting the slurry to a stirring treatment while raising the pressure, for example, at a temperature of about 220°C to 280°C to generate a leaching slurry composed of a leachate containing nickel and cobalt and a leaching residue by using, for example, a high temperature pressurization vessel (autoclave) or the like.

Here, examples of the nickel oxide mineral ore may mainly include so-called laterite ores such as a limonite ore and a saprolite ore. The nickel content in the laterite ore is usually 0.8% to 2.5% by weight, and nickel is contained as a hydroxide or a magnesium silicide (magnesium silicate) mineral.

In the leaching step S11, the leaching slurry composed of a leachate and a leaching residue obtained is separated into a leachate containing nickel, cobalt, and the like and a leaching residue which is hematite (mainly Fe₂O₃) by solid-liquid separation while being washed. In this solid-liquid separation treatment, for example, the leaching slurry is mixed with a washing liquid and then subjected to a solid-liquid separation treatment by using solid-liquid separation equipment such as a thickener using a coagulant to be supplied from a coagulant supply facility or the like. Specifically, the leaching slurry is first diluted with the washing liquid and then the leaching residue in the slurry is concentrated as a precipitate in the thickener.

The leachate separated by the solid-liquid separation treatment of the leaching slurry is transferred to the neutralization step S12 of the next step while the leaching residue is recovered from the bottom portion of the thickener. Incidentally, the leaching residue recovered is transferred to the leaching residue washing step and subjected to a washing treatment using washing water.

### (2) Neutralization Step

The neutralization step S12 is a step of adding a neutralizing agent to the leachate obtained in the leaching step S11 described above to adjust the pH and thus to obtain a precipitate by neutralization containing an impurity element and a post-neutralization liquid. By the neutralization treatment in this neutralization step S12, valuable metals such as nickel and cobalt are contained in the post-neutralization liquid and a greater part of impurities such as iron and aluminum is converted into a precipitate by neutralization.

As the neutralizing agent, conventionally known one can be used, and examples thereof may include calcium carbonate, slaked lime, and sodium hydroxide.

In the neutralization treatment in the neutralization step S12, it is preferable to adjust the pH to a range of 1 to 4 and it is more preferable to adjust the pH to a range of 1.5 to 2.5 while suppressing oxidation of the leachate separated. When the pH is less than 1, there is a possibility that the neutralization insufficiently proceeds and the slurry cannot be separated into a precipitate by neutralization and a post-neutralization liquid. On the other hand, when the pH exceeds 4, there is a possibility that not only impurities such as aluminum but also valuable metals such as nickel and cobalt are contained in the precipitate by neutralization.

### (3) Sulfurization Step

The sulfurization step S13 is a step of adding a sulfurizing agent to the post-neutralization liquid obtained in the neutralization step S12 described above to obtain a sulfide (mixed nickel-cobalt sulfide) of nickel and cobalt and a post-sulfurization liquid. By the sulfurization treatment in this sulfurization step S13, nickel, cobalt, zinc, and the like are converted into a sulfide and the others are contained in the post-sulfurization liquid.

Specifically, in the sulfurization step S13, a sulfurizing agent is added to the post-neutralization liquid obtained to cause a sulfurization reaction by which nickel and cobalt contained in the post-neutralization liquid are sulfurized into the form of a sulfide. By this, a sulfide of nickel and cobalt containing a small amount of impurity components and a post-sulfurization liquid (barren solution) with a nickel concentration stabilized to a low level are generated.

As the sulfurizing agent, for example, hydrogen sulfide gas, sodium sulfide, and sodium hydrogen sulfide (sodium hydrosulfide) can be used, but among these, it is particularly preferable to use hydrogen sulfide gas from the viewpoint of ease of handling, cost, and the like. In addition, a plurality of these sulfurizing agents may be added.

In this sulfurization treatment, a slurry of mixed nickel-cobalt sulfide is subjected to a precipitation and separation treatment using precipitation and separation equipment such as a thickener to separate and recover the mixed nickel-cobalt sulfide from the bottom portion of the thickener.

Here, in the method for removing residual hydrogen sulfide according to the present embodiment, hydrogen sulfide remaining in the reaction container after the sulfurization treatment in the sulfurization step S13 is removed as described above. In the sulfurization treatment in the sulfurization step S13, unreacted hydrogen sulfide remains after the reaction in the case of using hydrogen sulfide gas as a sulfurizing agent, and hydrogen sulfide is generated depending on the state of the solution even in the case of using a salt such as sodium sulfide or sodium hydrogen sulfide as a sulfurizing agent. In this method for removing residual hydrogen sulfide, hydrogen sulfide remaining after these treatment reactions is removed.

### (4) Final Neutralization Step

In the final neutralization step S14, the post-sulfurization liquid generated in the sulfurization step S13 described above, namely, the post-sulfurization liquid, which has been subjected to the separation of mixed nickel-cobalt sulfide and contains impurity elements such as iron, magnesium, and manganese, is subjected to a neutralization treatment (detoxification treatment) for adjusting the pH to a predetermined pH range which satisfies the effluent standards.

The method of detoxification treatment in the final neutralization step S14, namely, the method of pH adjustment is not particularly limited, but for example, the pH can be adjusted to a predetermined range by adding a neutralizing agent such as a calcium carbonate (limestone) slurry or a calcium hydroxide (slaked lime) slurry.

### <2-2. Removal of Residual Hydrogen Sulfide>

Fig. 2 is a diagram for explaining the flow of the method for removing residual hydrogen sulfide according to the present embodiment. In this method for removing residual hydrogen sulfide, for example, hydrogen sulfide remaining in the reaction container after the sulfurization treatment in the sulfurization step S13 described above is taken as a target of the removal.

### [Withdrawal of Process Liquid]

Specifically, the solution present in the reaction container after the sulfurization treatment is first withdrawn. Here, the solution to be withdrawn from the reaction container is, for example, the post-sulfurization liquid obtained by the sulfurization reaction, and in general, hydrogen sulfide is dissolved in the post-sulfurization liquid obtained by the sulfurization reaction. Hereinafter, this solution is also referred to as a "process liquid".

Incidentally, for example, in the sulfurization step S13 described above, the post-sulfurization liquid is separately withdrawn from the equipment by overflow as well as the mixed nickel-cobalt sulfide is separated and recovered from the bottom portion of the thickener by using precipitation and separation equipment such as a thickener, but the term "withdrawal of solution" herein includes the meaning of withdrawal by such overflow in a broad sense and also includes the meaning of withdrawing a trace amount of process liquid remaining in the reaction container after the withdrawal by overflow.

The method for withdrawing the process liquid from the reaction container is not particularly limited, but it is preferably a method capable of almost completely withdrawing the process liquid from the reaction container.

### [Adding and Stirring of Water]

Next, water is poured into the reaction container after being subjected to withdrawal of the process liquid. The method for pouring water into the reaction container is not particularly limited, but pouring of water is preferably performed by a method using a pump or the like from the viewpoint of charging a large volume of water in a shorter time. Incidentally, as the pump, a pump to be used for sending a solution after a treatment to the next step in usual process running can be used.

Moreover, as the amount of water charged into the reaction container at this time, an amount corresponding to a proportion to be 30% by volume or more and 100% by volume or less of the total volume of the reaction container from which the solution has been withdrawn is charged. In addition, the amount is set to be preferably 40% by volume or more and more preferably 50% by volume or more of the total volume of the reaction container. When the amount of water charged is less than 30% by volume of the total volume of the reaction container to be too small, the absorption of hydrogen sulfide gas into water and the washing of the solution (process solution) attached to the interior of the container become insufficient.

Subsequently, the water poured in the reaction container is stirred. It is possible to wash and remove the process liquid which is attached to the reaction container and contains hydrogen sulfide dissolved therein by pouring a predetermined amount of water into the reaction container in which the hydrogen sulfide gas remains and subjecting the water to a stirring treatment in this manner. In addition, it is possible to effectively absorb and remove the hydrogen sulfide gas from the gas phase by charging water and subjecting the water to a stirring treatment since the hydrogen sulfide gas remaining in the reaction container is easily dissolved in water.

The method for stirring water is not particularly limited, and stirring of water can be performed by a method in which a known stirrer is used, an inert gas is blown into water, or the like. In addition, the stirring time is set to preferably 10 minutes or more and more preferably 30 minutes or more from the viewpoint of sufficiently performing absorption of the residual hydrogen sulfide gas and washing of the process liquid attached to the interior of the reaction container. Incidentally, as a matter of course, it is more preferable as the treatment time for the stirring treatment is longer from the viewpoint of dissolution of the hydrogen sulfide gas, washing of the process liquid, and the like, but it is not preferable that the treatment time is too long since the opening time of the reaction container is lengthened.

The water is withdrawn from the reaction container when the stirring treatment of water is completed. Incidentally, it is preferable to send the water withdrawn to a facility and the like in which an evil effect eliminating treatment is performed since hydrogen sulfide is dissolved in the water.

### [Replacement with Inert Gas]

Next, an inert gas is blown into the reaction container from which water has been withdrawn to be filled and replaces the hydrogen sulfide gas remaining in the reaction container. The residual hydrogen sulfide concentration in the reaction container is lowered by performing such a replacement treatment.

The inert gas is not particularly limited, and nitrogen gas, argon, and the like can be used, but among these, nitrogen gas is preferably used from the viewpoint of being inexpensive and able to be produced in a great quantity. Incidentally, it is conceivable to use air as the gas for the replacement treatment, but there is a possibility that the residual hydrogen sulfide gas is oxidized by the air blown and fine sulfur is thus generated.

The method of the replacement treatment is not particularly limited, but an inert gas is blown into the reaction container so that the internal pressure thereof reaches, for example, 50 kPag or more and then the gas is withdrawn from the reaction container. It is possible to replace the hydrogen sulfide gas remaining in the reaction container with an inert gas, for example, by repeatedly performing such an operation.

In the method for removing residual hydrogen sulfide according to the present embodiment, the time for this replacement treatment using an inert gas can be shortened to, for example, about 1 hour. In other words, the residual hydrogen sulfide gas can be removed in a short time. This is because it is possible to absorb the residual hydrogen sulfide gas into water and also to easily wash and remove the process liquid with water even in a case in which the process liquid is present in the reaction container by charging a predetermined amount of water into the reaction container and performing a stirring treatment before the replacement treatment using an inert gas and it is thus possible to remove a large amount of residual hydrogen sulfide before the replacement treatment is performed.

Thereupon, a state in which the amount of hydrogen sulfide gas to be a target of replacement with an inert gas is decreased as compared with a conventional method is achieved and the treatment time for this replacement treatment can be thus shortened.

### [Separation of Inert Gas]

The inert gas is separated after the replacement treatment. The time point of the completion of the replacement treatment is judged, for example, based on the time point at which the hydrogen sulfide gas concentration in the reaction container measured by using a controlled potential electrolysis type hydrogen sulfide detector or the like is lowered to a level at which the human body is not affected.

### EXAMPLES

Hereinafter, the present invention will be more specifically described with reference to Examples, but the present invention is not limited to the following Examples at all.

### (Example 1)

As a sulfurization step in the hydrometallurgical process of a nickel oxide mineral ore, a sulfurization reaction using hydrogen sulfide gas and sodium hydrosulfide as a sulfurizing agent was caused in the solution after the neutralization treatment (post-neutralization liquid). Incidentally, this sulfurization reaction was conducted in a reaction system in which a sulfurization treatment is continuously performed by using four sulfurization reaction containers which had a stirrer and were connected in series.

### [1] Withdrawal of Process Liquid

After the sulfurization reaction was stopped, the post-sulfurization liquid (process liquid) remaining in the reaction container was withdrawn from the container.

### [2] Pouring of Water to Reaction Container, Stirring, and Withdrawal of Water

Next, water in an amount corresponding to 50% by volume of the total volume of the reaction container was supplied into the reaction container by using a pump. Incidentally, as the pump, the same one as the pump used when sending the process liquid generated to the reaction container was used.

Subsequently, the water charged in the reaction container was stirred over 1 hour by using a stirrer which was installed in the reaction container and equipped with a paddle type stirring blade, and the water was withdrawn from the reaction container after the stirring treatment. Incidentally, the water withdrawn was sent to the evil effect eliminating facility.

### [3] Replacement with Nitrogen Gas

Next, nitrogen gas was blown into the reaction container after being subjected to withdrawal of water and the replacement operation of the residual hydrogen sulfide gas was performed. Specifically, the hydrogen sulfide gas remaining in the reaction container was replaced with nitrogen gas by repeatedly performing an operation of raising the pressure in the reaction container with nitrogen gas so that the internal pressure thereof reached 50 kPag or more and then withdrawing the gas out of the reaction container.

The hydrogen sulfide concentration in the reaction container was measured by using a general controlled potential electrolysis type hydrogen sulfide detector, and it was regarded that the replacement of hydrogen sulfide was completed at the time point at which the hydrogen sulfide concentration in the reaction container reached 50 ppm or less. Incidentally, the mixed gas of nitrogen gas and hydrogen sulfide gas withdrawn from the reaction container was subjected to a treatment of removing hydrogen sulfide in a gas washing tower using an aqueous solution of sodium hydroxide as a washing liquid and then released into the air.

The operation as described above was performed, a series of steps were divided into [1] a step of "withdrawing process liquid", [2] a step of "pouring water into reaction container, stirring, and withdrawing water", [3] a step of "replacing hydrogen sulfide gas with nitrogen gas", respectively, and the time required for each step was measured.

As a result, the time required for the step [1] was 4 hours, the time required for the step [2] was 6 hours, and the time required for the step [3] was 24 hours and the time required to remove hydrogen sulfide remaining in the reaction container was 34 hours in total.

### (Comparative Example 1)

Unlike Example 1, the step [2] was not performed in Comparative Example 1. Incidentally, removal of the hydrogen sulfide remaining in the reaction container was performed by the same procedure as in Example 1 other than this.

The time required for each step was measured in the same manner as in Example 1, as a result, the time required for the step [1] was 4 hours, the time required for the step [2] was 0 hour, and the time required for the step [3] was 73 hours and the time required to remove hydrogen sulfide remaining in the reaction container was 77 hours in total.

From the results of Example 1 and Comparative Example 1 described above, it has been found that the time required for the replacement treatment using nitrogen gas can be greatly shortened in Example 1, in which a treatment of charging water into the reaction container and stirring the water was performed prior to the replacement treatment using nitrogen gas, as compared with Comparative Example 1 based on a conventional method. Moreover, it has been found that it is possible to decrease the time required for the operation of removing hydrogen sulfide remaining in the reaction container to a half or less than the time required in a conventional method and thus to perform an efficient operation even when the time for the charging of water into the reaction container and the stirring treatment of water is taken into account.

## Claims

1. A method for removing residual hydrogen sulfide, the method comprising removing hydrogen sulfide remaining in a reaction container in which a sulfurizing agent is added to a solution and a sulfurization reaction is caused, wherein
the solution is withdrawn from the reaction container and water in an amount corresponding to 30% by volume or more and 100% by volume or less of a total volume of the reaction container is added to the reaction container after being subjected to withdrawal of the solution and stirred, and
the reaction container after being subjected to withdrawal of the water is filled with an inert gas.

2. The method for removing residual hydrogen sulfide according to claim 1, wherein a stirring time of water charged in the reaction container is set to 10 minutes or more.

3. The method for removing residual hydrogen sulfide according to claim 1 or 2, wherein the solution is
a solution obtained after a leachate containing nickel and cobalt is obtained by acid leaching of a nickel oxide mineral ore using sulfuric acid at high temperature and high pressure, the leachate is neutralized, then a leachate after neutralization is subjected to a sulfurization treatment using a sulfurizing agent, and a sulfide of nickel and cobalt the sulfide generated is separated.
